# EUROPÄISCHE PATENTANMELDUNG

(11) **EP 1 217 539 A1**
(43) Veröffentlichungstag der Anmeldung: **26.06.2002**
(21) Anmeldenummer: 00128470.2
(22) Anmeldetag: 23.12.2000
(51) Int. Cl.: G06F 17/30

(54) **Verfahren zur nichtlinearen Aufbereitung und Identifikation von Informationen**

(71) Anmelder: ALSTOM (Switzerland) Ltd, 5401 Baden (CH)
(72) Erfinder: Fried, Reinhard, 5415 Nussbaumen (CH); Beeck, Alexander, 79790 Küssaberg (DE); Dittmann, Rolf, 5415 Rieden (CH)
(74) Vertreter: Pöpper, Evamaria, Dr.

(57) **Zusammenfassung**

Bei einem Verfahren zur Aufbereitung und Identifikation von Informationen werden Dokumente in Form von hierarchisch gegliederten Informationseinheiten aufbereitet. In einer Übersichtsdarstellung werden insbesondere charakterisierende graphische Elemente gezeigt. Auf diese Weise kann der Informationsgehalt eines Dokumentes schneller und zielsicherer erfasst werden als durch Schlagwortrecherchen.

## Beschreibung

### Technisches Gebiet

Die vorliegende Erfindung betrifft ein Verfahren zur nichtlinearen Aufbereitung und Identifikation von Informationen.

### Stand der Technik

Die Generierung an in Wirtschaft, Technik und Wissenschaft verwertbaren Informationen ist in den letzten Jahrzehnten immens gestiegen. Die Auswertung und Nutzung dieser Informationsfülle bedeutet insbesondere im Wirtschaftsleben einen immensen Wettbewerbsvorteil.

Nahezu jede Art von Information ist heutzutage in irgendeiner Weise in gesammelter und indexierter Form zugänglich. Dabei hat sich die Dokumentenarchivierung in Papierform mit Indizes beispielsweise in Form von Karteien und in Form von Mikrofiches heute fast vollständig zu elektronischen Datenbanken verschoben. Die Dokumente stehen häufig in volltextrecherchierbarer Form zur Verfügung. War also Wissen früher in einigen wenigen grossen Bibliotheken gesammelt, so ist heute nahezu jeder Wissensstand über Netzwerke an nahezu beliebiger Stelle für einen nahezu beliebig grossen Personenkreis leicht und schnell zugänglich.

Die generelle Zugänglichkeit grosser Informationsmengen für einen grossen Anwenderkreis ist gegeben. Das Problem, das sich heute bei einer Recherche stellt, ist, aus der zur Verfügung stehenden Informationsfülle tatsächlich auch die relevante Information auszuwählen. Hierzu sind Dokumente und sonstige Informationen beispielsweise nach Themengebieten, Schlagworten, Autor, Veröffentlichungsdatum, IPC-Klassifikation im Falle der Patentliteratur, und einer Vielzahl weiterer Kriterien, indexiert und klassiert. Gleichzeitig stellen Computerdatenbanken mächtige Suchinstrumente zur Verfügung, und häufig liegen Dokumente auch volltextrecherchierbar vor, das heisst, der gesamte Informationsgehalt eines Dokumentes kann nach bestimmte Begriffen durchsucht werden.

Es ist demnach bemerkenswert einfach geworden, eine grosse Informationsfülle nach eigentlich beliebigen Schlagworten und bibliographischen Daten zu durchsuchen. Als Ergebnis einer solchen Recherche nach einzelnen Schlagworten - auch innerhalb von abgegrenzten Themengebieten - wird man in den meisten Fällen eine nicht handhabbar grosse Datenmenge erhalten. Die Suche muss also nach Verknüpfungen von Schlagworten eingegrenzt werden. Dazu stehen die Möglichkeiten der booleschen Algebra zur Verfügung. Dies sind aber ihrer Natur nach lineare Operationen, die auf nichtlineare Probleme - nämlich die Semantik und die sprachliche Beschreibung eines Sachverhaltes - angewendet werden. Die ermittelten Dokumente werden sodann auf ihren Informationsgehalt analysiert und als relevant oder nicht relevant eingestuft. Der Auswahl mit Hilfe linearer Operationen wird also zwingend eine nichtlineare Operation nachgeschaltet, nämlich das Erfassen des eigentlichen Informationsgehaltes im gesamten Sprachkontext eines Dokumentes.

Neben dem Problem der Eingrenzung der Suche ergibt sich auf der anderen Seite das Problem der Recherche nach Synonymen. Damit ist nicht nur das Problem von Synonymen isolierter Begriffe gemeint, sondern das Problem synonymer Beschreibungen von Merkmalskombinationen.

Die genannten Schwierigkeiten bleiben auch bestehen, wenn durch eine Indexierung oder Klassierung von Dokumenten und Zuordnung zu bestimmten Themengebieten eine Vorauswahl bereits getroffen ist.

Eine Anzahl von Datenbankanbietern bietet eigene Kurzzusammenfassungen von Dokumenten an. Der Schritt der Analyse des Informationsgehaltes ist hierbei eigentlich bereits durchgeführt. Gleichwohl müssen auch diese Kurzzusammenfassungen wieder nach Schlagworten und Kombinationen von Schlagworten durchsucht werden, mit den oben angesprochenen Problemen der hinreichenden Eingrenzung einerseits und der Erfassung von Synonymen andererseits. Zudem kann der Verfasser einer solchen Kurzzusammenfassung ein Dokument in einen komplett anderen Kontext einordnen, als dies ein spezifischer Rechercheur tun würde.

Nach dem Stand der Dinge stellt sich bei der Recherche nach relevanten Informationen also das Problem, einerseits die Recherche auf spezifische Sachverhalte einzuschränken, andererseits aber auch die Recherche weit genug zu fassen, um auch Synonyme jedweder Art zu erfassen. Obschon mächtige Recherchewerkzeuge zur Verfügung stehen, bleibt die prinzipielle Schwäche, dass die nichtlineare Aufgabenstellung, die sprachliche Umschreibung eines Sachverhaltes zu suchen, mit linearen Methoden gelöst wird.

### Darstellung der Erfindung

Hier will die Erfindung Abhilfe schaffen. Die Erfindung hat sich zur Aufgabe gemacht, ein Verfahren zur Aufbereitung und Identifikation von Informationen zu schaffen, mit dem ohne das aufwändige Lesen eines Dokumentes der relevante Informationsgehalt schnell und zielsicher erfassbar ist.

Diese Aufgabe wird erfindungsgemäss durch die Merkmale des Anspruchs 1 gelöst.

Die Erfindung macht sich dabei in ihrem Kern die Erkenntnis zunutze, dass technische und naturwissenschaftliche Sachverhalte häufig insbesondere in Form einer Zeichnung oder Graphik einerseits prägnanter darzustellen sind, als in einer sprachlichen Umschreibung, und andererseits in dieser Form durch den menschlichen Verstand wesentlich schneller aufzunehmen sind. Dies zeigt sich auch daran, dass Leser insbesondere technischer Literatur eine erste Auswahl meist anhand von Zeichnungen und graphischen Darstellungen treffen, bevor sie die so ausgewählten Dokumente lesen. Die Erfindung ist hierbei natürlich nicht die Identifikation der Information selbst, sondern die Aufbereitung und Bereitstellung der Information in einer Weise, dass sie schnell erfassbar und in verschiedenen Informationstiefen zugänglich ist.

In einer bevorzugten Ausführungsform der Erfindung wird auf einer Darstellung der grössten Informationsbreite nur die oberste Informationseinheit eines jeden Dokumentes dargestellt. Dies ist bei einer Vielzahl von Anwendungen ganz besonders vorteilhaft eine Figur oder ein prägnanter Ausschnitt einer Figur, was natürlich ganz besonders zur Aufbereitung und Darstellung konstruktiver Sachverhalte geeignet ist.

Nützlich ist es weiterhin, wenn Dokumente bestimmten Themenbänden zugeordnet werden. Dies erlaubt dem Anwender bereits eine Vorauswahl zu treffen.

Mit Vorteil werden Verweise auf weiterführende Dokumente, welche auch ausserhalb des spezifischen Dokumentenbestandes lokalisiert sein können, wenigstens in eine Darstellung der grössten Informationstiefe eingefügt.

Das Verfahren kann ganz besonders vorteilhaft auf einem Computersystem oder in einem Computernetzwerk implementiert werden, wobei jedes Dokument als Datensatz in einer Datenbank abgespeichert wird. Eine solche Implementation beinhaltet bevorzugt auch eine graphische Benutzeroberfläche (GUI), mit Hilfe welcher sich ein Benutzer durch die verschiedenen Informationsebenen navigieren kann.

Zusammenfassend liegt der Erfindung die Idee zugrunde, Informationen zunächst zu analysieren und gemäss spezifischen Interessenprofilen der menschlichen Wahrnehmung gut zugänglich, insbesondere optisch, aufzubereiten. Diese Informationen werden dann mit einem insgesamt hohen Informationsgehalt besonders geeignet in Datensätzen einer Computerdatenbank, aber prinzipiell auch auf andere Weise, in Datensätzen abgelegt. Die Darstellung der Information wird so gewählt, dass diese auf verschiedenen Detailstufen angezeigt werden, so, dass gut zugängliche und schnell erfassbare Informationen mit einer geringen Informationstiefe, aber einer hohen Informationsbreite, dargestellt wird. Dies ist die Übersichtsdarstellung. Von dort aus kann der Anwender sehr leicht potenziell interessante Informationen auswählen, und bei Bedarf zu grösserer Informationstiefe verzweigen.

### Kurze Beschreibung der Zeichnung

Die Erfindung wird nachfolgend unter Verweis auf die Zeichnung näher erläutert. Die Figuren zeigen beispielhaft einige Darstellungsweisen von erfindungsgemäss aufbereiteten Dokumenten.

### Weg zur Ausführung der Erfindung

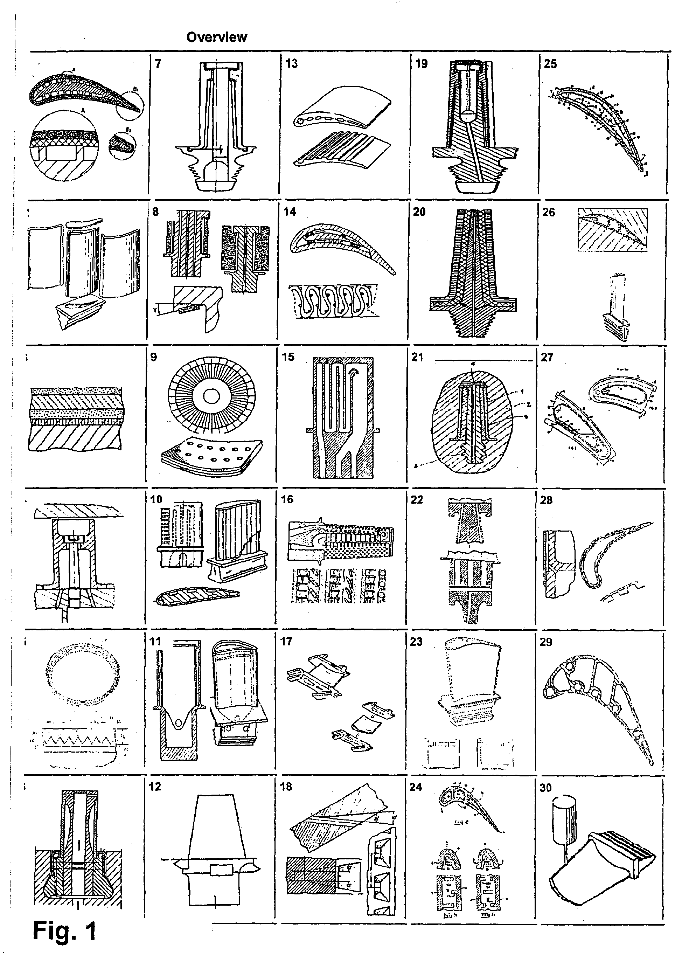

In Fig. 1 ist ein prinzipielles Beispiel für eine Darstellung von Dokumenten auf der höchsten Informationsbreite gegeben. Prinzipiell ist dies eine Übersichtsdarstellung. Es handelt sich um eine Sammlung von Dokumenten, die beispielsweise thematisch unter "Gasturbinenschaufeln" zusammengefasst sind. Als oberste Informationseinheit ist jeweils eine Zeichnung ausgewählt, welche im spezifischen Zusammenhang relevante charakteristische Merkmale eines bestimmtes Dokumentes aufzeigt. Eine solche Darstellung allein kann bereits als "Inspirationshilfe" für einen Konstrukteur dienen. Bei der Ausführung der Erfindung mit einem Computersystem kann innerhalb dieser Übersichtsdarstellung im Hintergrund jeder Figur ein Verweis auf eine andere Detailstufe des jeweiligen Dokumentes verborgen sein, welche zum Beispiel durch einen Mausklick angewählt werden kann.

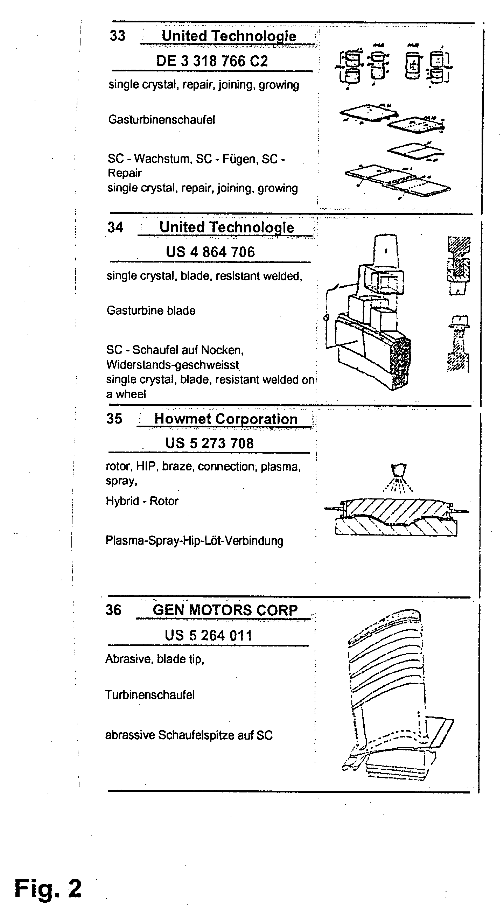

In der Darstellung in Fig. 2 sind Dokumente auf einer Darstellung grösserer Informationstiefe gezeigt. Es handelt sich dabei um Patentdokumente, da die Patentliteratur heute einen bedeutenden und frei zugänglichen Fundus für den Stand der Technik bildet. In dieser Detailstufe sind neben der im spezifischen Kontext als relevant erkannten Figur weiterhin auch der Patentinhaber und die Veröffentlichungsnummer als bibliographische Daten, sowie eine Anzahl relevanter Schlagworte aufgeführt.

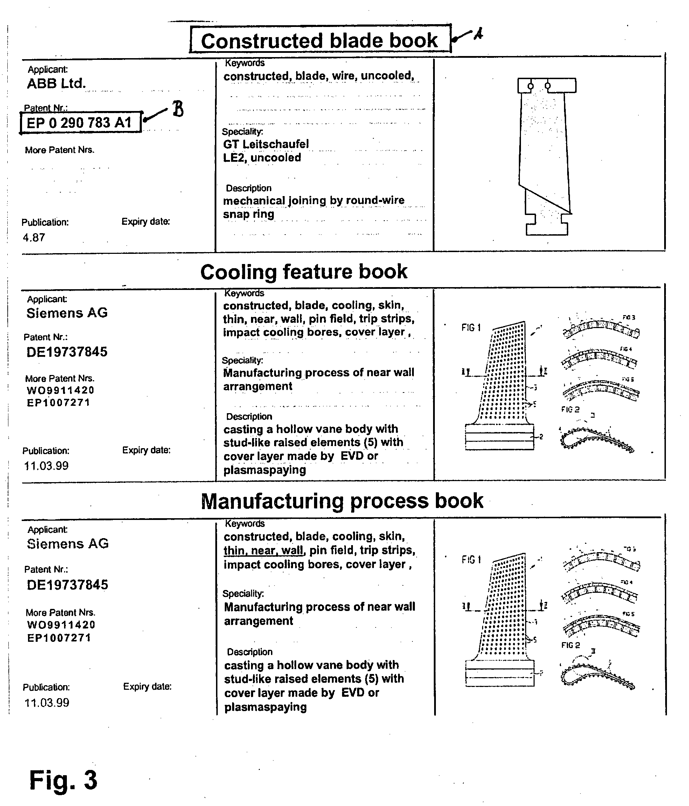

Von der Darstellung in Figur 2 kann wiederum durch Anwahl von Dokumenten mittels eines Zeigeinstrumentes wie einer Maus auf eine weitere, beispielhaft in Fig. 3 wiedergegebene, Darstellung verzweigt werden. Hier sind weitere Einzelheiten inhaltlicher und bibliographischer Art wiedergegeben. Insbesondere ist die Zuordnung eines Dokumentes zu einem Themenband wiedergegeben (Detail A). Die Patentnummer ist mit einem Verweis zu einem Volltextdokument versehen. Dies kann prinzipiell ein Verweis auf eine Datei sein, aber auch ein sogenannter Hyperlink, der auf eine Internetadresse verweist, wo das Volltextdokument archiviert ist, und dieses auf das lokale Computersystem lädt.

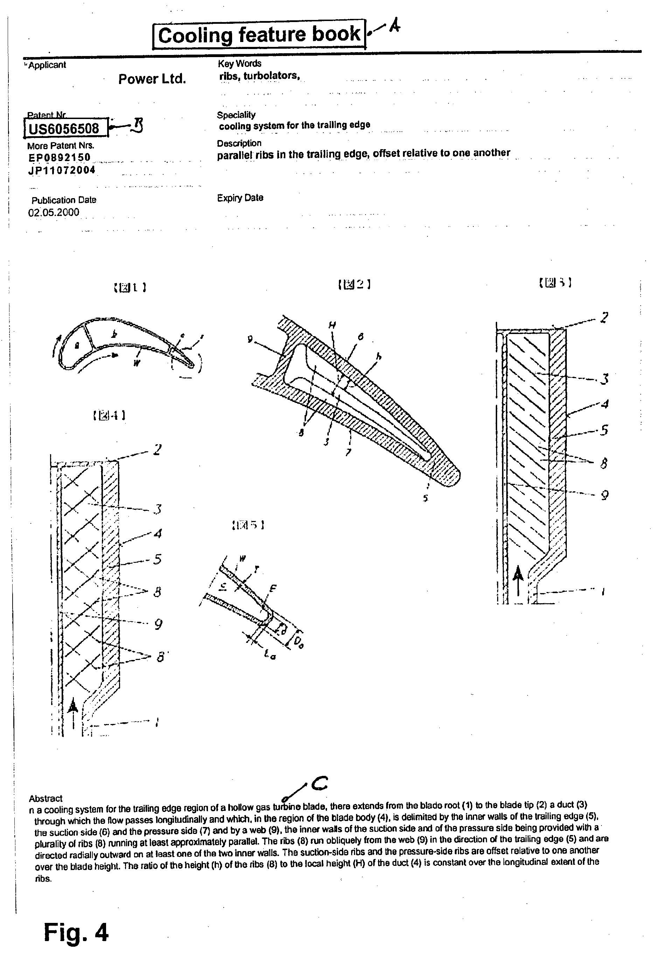

In Fig. 4 ist schliesslich nur noch ein Dokument, aber in einer Darstellung der grössten Informationstiefe, gezeigt. Diese Darstellung enthält weitere Figuren sowie eine Kurzzusammenfassung (Detail C). Auch hier ist über einen der Dokumentennummer B unterlegten Verweis unmittelbar das Volltextdokument zugänglich.

Die Anzeige der Dokumente kann sortiert nach Themenbänden oder nach anderen Kriterien erfolgen. In der Figur 3 sind Dokumente aus den Themenbänden "Constructed Blade Book", "Cooling Feature Book" und "Manufacturing Process Book" dargestellt. Es ist sehr von Vorteil, dem Anwender zu einer ersten Eingrenzung der Dokumentenmenge die Möglichkeit zu geben, bestimmte Themenbände zur Anzeige auszuwählen. Weiterhin ist auch zu erkennen, dass ein Dokument durchaus auch mehreren Themenbänden zugeordnet sein kann.

Die Aufbereitung der Daten zur Darstellung in der hier gezeigten Form erfordert eine einmalige Analyse des Dokumentes. Daraufhin erfolgt die Einordnung in ein spezifisches Interessenprofil, dabei insbesondere die Zuordnung zu einem Themenband. Es erfolgt die Identifikation und optische Hervorhebung und/oder Bearbeitung einer Informationseinheit als oberste Informationseinheit. In dem im Ausführungsbeispiel dargestellten Fall wird demnach eine relevante Figur oder ein relevanter Ausschnitt aus einer Figur als oberste Informationseinheit eingestuft. Der Informationsgehalt des Dokumentes wird in unterschiedlich gewichtete Informationseinheiten unterteilt, welche in ein Ordnungsschema auf unterschiedlichen Hierarchiestufen eingeordnet werden. Das so aufbereitete Dokument wird in einen Dokumentenbestand eingeordnet. Insbesondere bietet es sich bei der Realisierung der Erfindung an, die Informationseinheiten jedes Dokumentes als Datensatz in einer Datenbank abzulegen. Damit ist es auch möglich, in die Dokumente Verweise zu Volltextdokumenten oder weiterführenden Dokumenten einzufügen. Dies können ganz besonders sogenannte Hyperlinks auf andere Adressen in einem weltweiten Computernetzwerk sein. Insbesondere in den Detailstufen, die im Beispiel in den Figuren 2 bis 4 dargestellt sind, kann mittels der Auswahl der Dokumentennummer mittels eines Zeigeinstrumentes ein in einer anderen Datenbank, auf einem anderen Datenträger, oder auf einem anderen Computer, beispielsweise auch in einem anderen Datenformat, abgelegtes Dokument aufgerufen werden. Dabei können auch von verschiedenen Datensätzen aus unterschiedliche Dokumentenarten und -formate, die auf unterschiedlichen Computern abgelegt sind, aufgerufen werden.

Die Besonderheit des erfindungsgemässen Verfahrens ist in erster Linie darin zu sehen, dass die Suche nach den Dokumenten nicht in primär mittels linearer Operationen - der Verknüpfung von Suchbegriffen mittels Operatoren der booleschen Algebra - erfolgt, sondern die Informationen so aufbereitet werden, dass anhand der optischen und verstandesmässigen Analyse der obersten Informationseinheit, im Beispiel der Zeichnung, die Relevanz des Dokumentes bestimmt wird.

## Patentansprüche

1. Verfahren zur nichtlinearen Aufbereitung und Identifikation von Informationen, welches Verfahren die folgenden Schritte beinhaltet:
- Analyse eines Dokumentes;
- Einordnen des Dokumentes in ein spezifisches Interessenprofil;
- Identifikation einer relevanten Informationseinheit als oberste Informationseinheit;
- optische Hervorhebung und/oder Bearbeitung der obersten Informationseinheit;
- Untergliederung des Dokumentes in unterschiedlich gewichtete Informationseinheiten;
- Einordnung der gewichteten Informationseinheiten des Dokumentes in einem Ordnungsschema für Informationseinheiten;
- Einordnung des Dokumentes in einen Dokumentenbestand;
- Darstellung gleich gewichteter Informationseinheiten unterschiedlicher Dokumente des Dokumentenbestandes auf einer Übersichtsdarstellung einer ersten Detailstufe mit einer ersten Informationsbreite und einer ersten Informationstiefe;
- Einfügen eines Verweises auf wenigstens eine Darstellung einer zweiten Detailstufe mit kleinerer Informationsbreite und grösserer Informationstiefe.

2. Verfahren nach Anspruch 1, wobei in einer Darstellung der geringsten Informationstiefe und der grössten Informationsbreite nur die oberste Informationseinheit der Dokumente des Dokumentenbestandes dargestellt wird.

3. Verfahren nach einem der Ansprüche 1 oder 2, **dadurch gekennzeichnet, dass** die oberste Informationseinheit eine Figur oder ein gemäss dem spezifischen Interessenprofil prägnanter Ausschnitt einer Figur ist.

4. Verfahren nach einem der Ansprüche 1 bis 3, wobei Dokumente des Dokumentenbestandes bestimmten Themenbänden zugeordnet werden.

5. Verfahren nach einem der Ansprüche 1 bis 4, wobei wenigstens in eine Darstellung der grössten Informationstiefe Verweise auf weiterführende Dokumente eingefügt werden.

6. Verfahren nach einem der Ansprüche 1 bis 5, wobei das Verfahren mittels eines Programmes auf einem Computer und/oder einem vernetzten Computerverbund ausgeführt wird.

7. Verfahren nach Anspruch 6, wobei jedes Dokument als Datensatz in einer Datenbank abgespeichert ist.

8. Computerdatenbank, welche die gemäss einem Verfahren nach einem der Ansprüche 1 bis 7 bearbeiteten Dokumente enthält.

9. Computerdatenbank nach Anspruch 8, welche automatisierte Verweise auf Dokumente enthält, welche in anderen Datenbanken und/oder auf anderen Computern abgelegt sind.

10. Computerlesbarer Datenträger, auf welchem eine Computerdatenbank nach einem der Ansprüche 8 oder 9 gespeichert ist.
